# EUROPÄISCHE PATENTSCHRIFT

(11) **EP 1 296 583 B1**
(45) Veröffentlichungstag und Bekanntmachung des Hinweises auf die Patenterteilung: **05.04.2006**
(21) Anmeldenummer: 01907444.2
(22) Anmeldetag: 11.01.2001
(51) Int. Cl.: A47G 29/14

(54) **ZUSTELLBEHÄLTER MIT CODESCHLOSS**
DELIVERY RECEPTACLE COMPRISING A CODE LOCK
RECIPIENT DE DISTRIBUTION MUNI D'UNE SERRURE CODEE

(30) Priorität: 14.01.2000 DE 10001538; 10.02.2000 DE 10006053; 20.04.2000 DE 10019966; 11.07.2000 DE 10033664; 05.10.2000 DE 10049612
(43) Veröffentlichungstag der Anmeldung: 02.04.2003
(73) Patentinhaber: Fassbender, Jörg Jost, 44339 Dortmund (DE); Weber, Gerald, 59071 Hamm (DE)
(72) Erfinder: Fassbender, Jörg Jost, 44339 Dortmund (DE); Weber, Gerald, 59071 Hamm (DE)
(74) Vertreter: Behrendt, Arne
(86) Internationale Anmeldenummer: PCT/EP2001/000326
(87) Internationale Veröffentlichungsnummer: WO 2001/051744

(56) Entgegenhaltungen:
- EP-A- 0 821 518
- WO-A-00/76378
- WO-A-01/15579
- DE-U- 29 807 184
- US-A- 5 223 829
- US-A- 5 774 053
- US-A- 5 979 750

## Beschreibung

Die Erfindung betrifft ein Verfahren für den Betrieb von Warenzustellbehältern mit elektronischem Codeschloß, wobei eine Öffnung des Behälters für die Zustellung von Warensendungen mittels eines Zustellcodes erfolgt, wobei ein Zusteller zur Öffnung des Behälters den Zustellcode in das Codeschloß eingibt, und mittels eines Empfängerschlüssels, über den ausschließlich der Empfänger der Warensendung verfügt, wobei der Empfängerschlüssel entweder ein Code für das elektronische Codeschloß oder ein mechanischer Schlüssel zum Öffnen des Behälters ist. Weiterhin betrifft die Erfindung Warenzustellbehälter zur Durchführung dieses Verfahrens.

Unter der Bezeichnung "E-commerce" werden alle Arten von Versandgeschäften zusammengefaßt, bei denen das Angebot von Waren über ein globales Datennetz (Internet) erfolgt und bei denen die Bestellung durch den Käufer ebenfalls online über das Datennetz durchgeführt wird. Ein wesentliches Akzeptanz-Problem des E-commerce Versandhandels beruht auf der derzeitigen Praxis der Heimzustellung der bestellten Waren. Oft ist der Empfänger zum Zeitpunkt der Zustellung nicht an seinem Wohnsitz anwesend. Entweder erfolgt in diesem Fall eine wiederholte Zustellung oder der Empfänger muß die Ware an einer zentralen Ausgabestelle des Zustellunternehmens persönlich abholen. Alternativ wird die Ware in Abwesenheit des Empfängers vom Zusteller in der Nachbarschaft abgegeben oder einfach vor der Haustür liegengelassen. Letzteres ist im Falle von wertvollen Waren ausgeschlossen, bei denen eine Quittierung des Empfangs benötigt wird.

Die beschriebene Praxis der Heimzustellung von Warensendungen wird vom Kunden als unkomfortabel und unsicher empfunden. Insbesondere wenn die Waren in Abwesenheit des Empfängers im Hausflur, auf dem Treppenabsatz oder vor der Haustür abgelegt werden, besteht die nicht unerhebliche Gefahr des Diebstahls. Sowohl von den Online-Anbietern als auch von den Zustellunternehmen werden Zustellverfahren gewünscht, bei denen eine Anlieferung der bestellten Waren zu jeder beliebigen Tageszeit unabhängig von der persönlichen Anwesenheit des Empfängers erfolgen kann. Hierzu ist es nötig, daß der Zusteller die Ware am Wohnsitz des Empfängers sicher gegen Diebstahl geschützt deponieren kann.

Einen hierzu geeigneten Zustellbehälter schlägt die DE 297 12 361 vor. Es handelt sich hierbei um eine großvolumige verschließbare Box, die wie ein herkömmlicher Briefkasten für die Zustellung von Waren am Wohnsitz des Adressaten verwendet wird. Die vorbekannte Box verfügt über ein elektronisches Codeschloß, so daß ein Zusteller, der sich mittels eines entsprechenden Zahlencodes autorisiert, die Box zur Deponierung der bestellten Waren öffnen kann. Danach ist die Ware in dem Zustellbehälter sicher gegen Diebstahl geschützt, bis sie vom Empfänger entnommen wird. Bei der vorbekannten Zustellbox ist des weiteren vorgesehen, daß die angelieferte Ware mit einem elektronischen Chip versehen wird, durch den die Ware mittels einer in der Zustellbox integrierten Empfangselektronik identifiziert wird. Auf diese Weise wird die Anlieferung und die Entnahme bestimmter Warensendungen durch die Box automatisch registriert. Dies ermöglicht es, einen Empfangsbeleg für die von der Box elektronisch identifizierte Ware auszustellen.

Bei der vorbekannten Zustellbox ist nachteilig, daß ein relativ großer schwer überschaubarer Personenkreis von Zustellern für den Zugriff autorisiert werden muß. Ein erheblicher Sicherheitsmangel besteht darin, daß es Dritten, die unberechtigterweise im Besitz des Zahlencodes zum Zugriff auf die Zustellbox sind, nach erfolgter Zustellung möglich ist, die in der Box deponierten Waren zu stehlen. Nachteilig ist des weiteren, daß für das Verfahren zur Erstellung eines Empfangsbelegs aufwendige elektronische Mittel nötig sind. Hierzu zählen die elektronischen Chips, die auf den einzelnen Warensendungen angebracht werden müssen, sowie die zugehörige Empfangselektronik, die bei der vorbekannten Zustellbox unter anderem in einer im Inneren der Box angebrachten Rahmenantenne besteht. Durch diese aufwendige Elektronik entstehen nicht unerhebliche Kosten, die weder der Versandhandel noch die potentielle Kundschaft zu tragen bereit sind.

Ein ähnliches Zustellsystem ist aus der US-PS 5 223 829 bekannt. Auch bei diesem bekannten System benötigt man eine aufwendige Sensorik, die feststellt, ob der Zustellbehälter jeweils belegt ist oder nicht. Eine solche Sensorik ist in Anbetracht der unterschiedlichen Natur der einzelnen Warensendungen natürlich fehlerträchtig und störanfällig. Ein wesentlicher Nachteil der in der US-PS 5 223 829 beschriebenen Anlage besteht darin, daß jeweils ein Fach der Anlage durch Eingabe der Haus- oder Apartmentnummer des Empfängers freigegeben wird. Das bedeutet, daß eine beliebige Person auch ohne eine zuzustellende Warensendung die Anlage öffnen kann. Hierdurch wird es relativ leicht möglich, die Anlage für beliebige Einwürfe zu mißbrauchen.

Dementsprechend liegt der vorliegenden Erfindung die Aufgabe zugrunde, unter Vermeidung der vorgenannten Nachteile ein Verfahren für den Betrieb eines Warenzustellbehälters sowie einen Warenzustellbehälter bereitzustellen, bei dem eine sichere gegen Diebstahl geschützte Deponierung von bestellten Waren beim Empfänger ermöglicht wird, so daß insbesondere unberechtigte Personen keinen Zugriff auf die beim Adressaten deponierte Ware erhalten können. Dabei soll das Verfahren ohne besondere Aufwendungen durch jedes beliebige Zustellunternehmen ohne Umstellung des jeweils etablierten Versandablaufs durchführbar sein. Gleichzeitig soll der verwendete Zustellbehälter einfach aufgebaut und damit kostengünstig herstellbar sein.

Diese Aufgabe wird bei einem Verfahren für den Betrieb eines Warenzustellbehälters mit elektronischem Codeschloß der eingangs genannten Art dadurch gelöst, daß das Codeschloß nach einer mittels des Zustellcodes erfolgten Öffnung des Behälters für eine erneute Öffnung mittels des Zustellcodes gesperrt wird, und zwar in der Weise, daß der Behälter nach der Sperrung nur noch mittels des Empfängerschlüssels geöffnet werden kann, wobei der Behälter wieder entsperrt wird, sobald eine Öffnung des Zustellbehälters mittels des Empfängerschlüssels erfolgt ist, so daß der Behälter danach für die Zustellung von Warensendungen mittels des Zustellcodes wieder geöffnet werden kann.

Beim Zustellvorgang öffnet der Zusteller das elektronische Codeschloß des Warenzustellbehälters mittels eines Zustellcodes, der ihn für den Zugriff autorisiert. Dieser steht als permanenter Bestandteil in der Empfängeradresse und muß somit nicht aufwendig kommuniziert werden. Danach legt er die Warensendung im Inneren des Warenzustellbehälter ab, worauf er den Warenzustellbehälter wieder verschließt. Damit ist die im Inneren befindliche Ware sicher gegen Diebstahl geschützt. Gemäß der Erfindung wird ein Zugriff durch Dritte, die sich unberechtigterweise im Besitz des Zustellcodes befinden, dadurch verhindert, daß der Warenzustellbehälter nach einer so erfolgten Zustellung für einen erneuten Zugriff mittels des Zustellcodes gesperrt wird. Der Empfänger der Warensendung verfügt dagegen über einen Empfängerschlüssel, der es ihm ermöglicht, den Warenzustellbehälter zur Entnahme der angelieferten Waren zu öffnen. Benutzt der Empfänger seinen Empfängerschlüssel zur Entnahme der Ware, so wird das Codeschloß automatisch wieder entsperrt, so daß der Warenzustellbehälter für die nächste Zustellung mittels Zustellcode bereit ist.

Das Verfahren gemäß der Erfindung beruht auf der Grundidee, den Zugriff auf den Warenzustellbehälter auf zwei verschiedene unabhängige Arten möglich zu machen. Zum einen wird hierzu ein Zustellcode verwendet, mit dem der Warenzustellbehälter geöffnet werden kann. Mit dem Zustellcode können beliebige Personen zum Zugriff auf den Warenzustellbehälter autorisiert werden, wobei mit dem Zustellcode lediglich die Ablage von Waren in einem Warenzustellbehälter möglich ist. Im Gegensatz zu der vorbekannten Zustellbox stellt es bei dem Verfahren gemäß der Erfindung kein besonders Sicherheitsrisiko dar, einen beliebigen Personenkreis zum Zugriff auf den Warenzustellbehälter zu autorisieren. Eine unberechtigte Entnahme von Warensendungen ist nämlich gemäß der Erfindung ausgeschlossen, da das Codeschloß mittels des Zustellcodes nicht ein zweites mal geöffnet werden kann, sobald sich eine Ware in dem Behälter befindet. Zum anderen ist die Öffnung des Warenzustellbehälters mittels des Empfängerschlüssels möglich, über den ausschließlich der Empfänger verfügt. Der Zusteller öffnet immer ein leeres Fach, der Empfänger immer ein gefülltes. Somit ist eine Entnahme der in dem Warenzustellbehälter befindlichen Waren gemäß der Erfindung ausschließlich für den Empfänger möglich.

Bei dem Verfahren gemäß der Erfindung wird außerdem automatisch das Codeschloß entsperrt, sobald ein Zugriff auf den Warenzustellbehälter mittels des Empfängerschlüssels erfolgt, so daß der Warenzustellbehälter danach für die Zustellung von Warensendungen mittels des Zustellcodes geöffnet werden kann. Auf diese Weise wird der Warenzustellbehälter nach der Leerung mittels des Empfängerschlüssels für die nächste Zustellung, für die eine Öffnung des Warenzustellbehälters mittels Zustellcode möglich sein muß, vorbereitet. Nachdem auf den Warenzustellbehälter mittels des Empfängerschlüssels zugegriffen worden ist, besteht keine Gefahr mehr, daß der Warenzustellbehälter unberechtigterweise zum Zwecke des Diebstahls mittels Zustellcode geöffnet wird, weil sich keine Ware mehr in dem Warenzustellbehälter befindet.

Mit den erfindungsgemäß betriebenen Warenzustellbehältern kann vorteilhafterweise bereits heute, ohne jegliche Anpassung der bei den E-commerce Unternehmen bestehenden und bewährten Versandabläufe, eine Zustellung unter Vermeidung der oben beschriebenen Sicherheits- und Komfortprobleme erfolgen. Üblicherweise verwenden die E-commerce Anbieter auf ihrer Internet-Homepage eine Eingabemaske, in welcher der Besteller seinen Namen und seine Anschrift einträgt. Diese Eingabemaske enthält in der Regel auch ein Eingabefeld für vom Besteller frei verwendbare Adreßzusätze. Ein solches Eingabefeld kann zweckmäßigerweise dazu genutzt werden, dem E-commerce Unternehmen den Zustellcode für den Warenzustellbehälter zu übermitteln. Der Code wird dann beim Versand von bestellter Ware als fester Adreßbestandteil auf das zu versendende Paket aufgedruckt; und der Zusteller kann dann beim Zustellvorgang zum Öffnen eines Warenzustellbehälters den Code direkt von dem Paket ablesen. Bei den meisten E-commerce Anbietern ist es üblich, daß sich die Besteller einmalig als Kunden registrieren. Dabei werden, wie oben beschrieben, die für die Zustellung benötigten Daten einmalig eingegeben. Somit wird dann dem E-commerce Unternehmen gleichzeitig ein fester Zustellcode als Adreßbestandteil mitgeteilt, welcher bei allen zukünftigen Bestellungen verwendet werden kann. Dies hat den Vorteil, daß der Anbieter in das erfindungsgemäße Verfahren eingebunden wird, ohne hierfür irgendwelche Vorkehrungen oder Änderungen in seiner Organisation vornehmen zu müssen. Auf Grund der erfindungsgemäßen Funktionsweise besteht in der ohne jegliche Geheimhaltung erfolgenden Mitteilung des Zustellcodes kein besonderes Sicherheitsrisiko, weil ein Öffnen des Warenzustellbehälters mittels dieses Codes nur möglich ist, wenn sich keine Ware darin befindet. Die Übermittlung des Zustellcodes ist immer möglich. Auch in dem Fall, in dem ein Anbieter keinen Platz für eine weitere Zeile in der Adresse vorsieht, ist es möglich, mit dem Zustellcode den Namen zu ersetzen. Das kann sogar ein Vorteil sein, wenn der Empfänger eine anonyme Zustellung bevorzugt. Durch die eindeutige Verbindung zwischen Zustellcode und Empfängercode ist sichergestellt, daß nur der richtige Empfänger seine Ware entnehmen kann.

Zweckmäßigerweise wird der beim Bestellvorgang vom Empfänger an den Anbieter übermittelte Zustellcode durch den Anbieter vor dem Versand an der bestellten Ware angebracht. Beim Versand der Ware werden üblicherweise Adreßaufkleber erzeugt, welche die vom Empfänger eingegebene Zustelladresse enthalten. Diese Adressaufkleber enthalten somit automatisch auch den zur Öffnung des Warenzustellbehälters zu verwendenden Zustellcode.

Es kann vorteilhaft sein, wenn der Zustellcode an der Ware ergänzend oder auch substituierend in maschinenlesbarer Form angebracht wird. Hierdurch wird der Zustellvorgang gemäß der Erfindung noch erleichtert. Es ist beispielsweise denkbar, daß der empfängerseitige Warenzustellbehälter über eine Vorrichtung verfügt, über welche der an der Ware angebrachte maschinenlesbare Code zur Öffnung des Warenzustellbehälters eingelesen werden kann. Die Verwendung eines maschinenlesbaren Zustellcodes hat den weiteren Vorteil, daß der für den Zugriff auf den Warenzustellbehälter nötige Code nicht ohne weiteres in die Hände Unberechtigter gelangen kann.

Zweckmäßigerweise kann der Warenzustellbehälter über eine Einrichtung verfügen, über welche der Zusteller nach erfolgter Zustellung eine Quittung erhält.

Zur Durchführung des erfindungsgemäßen Verfahrens ist ein Warenzustellbehälter mit elektronischem Codeschloß geeignet, der mittels eines Zustellcodes und mittels eines Empfängerschlüssels zu öffnen ist. Dabei ist das Codeschloß einer Programmsteuerung zugewiesen, durch welche das Codeschloß nach einer Öffnung des Warenzustellbehälter mittels des Zustellcodes gesperrt wird, so daß danach ein Zugriff mittels des Zustellcodes nicht mehr möglich ist, wobei eine Entsperrung des Codeschlosses erfolgt, wenn der Warenzustellbehälter mittels des Empfängerschlüssels geöffnet wird. Es ist auf einfache Weise möglich, diebstahlsichere abschließbare Warenzustellbehälter mit programmgesteuerten elektronischen Codeschlössern zu versehen. Auch eine Nachrüstung von herkömmlichen abschließbaren Briefkästen mittels eines derartigen Codeschlosses ist ohne weiteres denkbar. Gegenüber der vorbekannten Zustellbox ergibt sich daraus der Vorteil, daß das erfindungsgemäße Verfahren mit einfachen Mitteln bei geringem Kostenaufwand implementiert werden kann. Desweiteren kann der erfindungsgemäße Warenzustellbehälter in eine Mehrzahl von unabhängig voneinander verschließbare Kammern aufgeteilt sein. Dies bietet insbesondere dann Vorteile, wenn während der Abwesenheit des Empfängers mehrere Zustellungen, ggf. durch verschiedene Paketdienste, erfolgen.

Zweckmäßig ist es weiter, den Warenzustellbehälter gemäß der Erfindung mit einer Ausgabeeinheit zu versehen, durch welche nach erfolgter Zustellung die Ausgabe eines Quittungsbeleg erfolgt. Insbesondere bei wertvolleren Warensendungen wird eine Bestätigung des Empfangs der Ware etwa in Form eines schriftlichen Beleges verlangt. Der Nachweis der Lieferung kann bei dem Zustellbehälter gemäß der Erfindung dadurch erfolgen, daß die Ausgabeeinheit einen Quittungsbeleg generiert, auf dem der Empfänger, dem der Zustellbehälter zugeordnet ist, eindeutig identifiziert wird und auf dem der für die Quittung des Warenzustellbehälters verwendete Zustellcode angegeben wird. Uhrzeit und Datum können als weitere Angaben auf dem Quittungsbeleg enthalten sein, um die erfolgte Zustellung zu dokumentieren.

Es ist ferner vorteilhaft, wenn dem Codeschloß eine elektronische Speichereinheit zugeordnet ist, in welcher eine Mehrzahl von Zustellcodes und Empfängercodes speicherbar ist. Auf diese Weise wird es möglich, daß mehrere Empfänger über ein- und denselben Warenzustellbehälter Ware beziehen können.

Es ist zweckmäßig, die Steuerung der Warenzustellbehälter mit einer Lesevorrichtung zu versehen, über welche Zustellcodes in maschinenlesbarer Form zum Öffnen des Warenzustellbehälter einlesbar sind. Hierdurch wird einerseits der Zustellvorgang vereinfacht und andererseits führt, wie bereits erwähnt, die Verwendung eines maschinenlesbaren Zustellcodes zu einer weiteren Erhöhung des Sicherheitsniveaus.

Ausführungsbeispiele der Erfindung werden im folgenden anhand der Figuren erläutert. Es zeigen:
- Fig. 1: Schematische Darstellung eines Bestell-und Zustellvorganges gemäß der Erfindung;
- Fig. 2: erfindungsgemäßer Zustellbehälter mit Codeschloß;
- Fig. 3: Briefkasten mit nachträglich montierbarem Codeschloß;
- Fig. 4: Zustellbehälter mit U-Profil (geschlossen);
- Fig. 5: Zustellbehälter an Türblatt befestigt;
- Fig. 6: Zustellbehälter mit U-Profil (offen);
- Fig. 7: Zustellbehälter mit Spannbefestigung

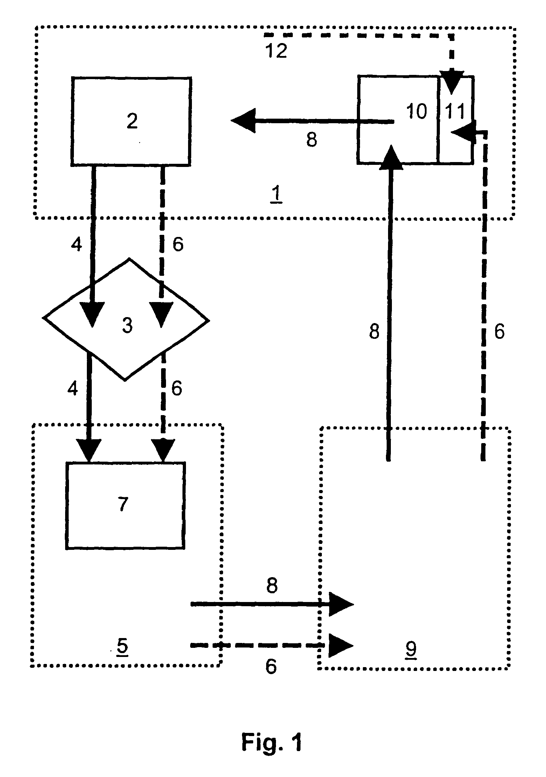

Die Figur 1 zeigt einen Empfänger 1, der mittels seines PC 2 über ein globales Datennetz 3, wie zum Beispiel das Internet, eine Warenbestellung 4 an einen Online-Anbieter 5 überträgt. Zusammen mit der Bestellung 4 wird gleichzeitig ein Zustellcode 6 an einen Server 7 des Online-Anbieters 5 übertragen. Der Online-Anbieter 5 übergibt ein die bestellte Ware enthaltendes Paket 8 sowie den Zustellcode 6 an ein Zustellunternehmen 9. Dieses liefert die Ware 8 bei dem Empfänger 1 an, indem der Zusteller 9 das Paket 8 in einem Zustellbehälter 10 deponiert. Auf den Zustellbehälter 10 erhält der Zusteller 9 mittels des Zustellcodes 6 Zugriff, in dem er den Zustellcode 6 in ein elektronisches Codeschloß 11 des Zustellbehälters 10 eingibt. Nach der Eingabe des Zustellcodes 6 wird das Codeschloß 11 gemäß der Erfindung gesperrt, so daß das Paket 8 nicht unberechtigterweise mittels des Codes 6 aus dem Behälter 10 entnommen werden kann. Nach erfolgter Zustellung entnimmt der Empfänger 1 die Ware 8 aus dem Zustellbehälter 10, indem er diesen mittels eines nur ihm zur Verfügung stehenden Empfängerschlüssels 12 öffnet.

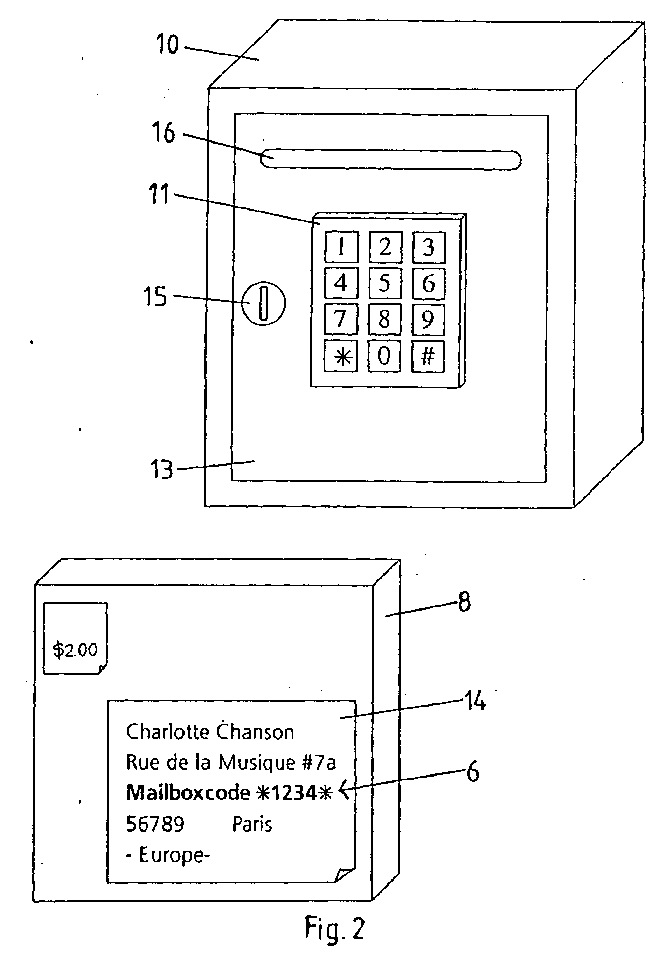

Die Figur 2 zeigt den Zustellbehälter 10 mit dem elektronischen Codeschloß 11. Der Zustellbehälter 10 weist eine vordere Klappe 13 auf, die durch das Codeschloß 11 gesichert ist. Die Figur zeigt des weiteren das Paket 8, auf dem vom Online-Anbieter ein Adreßaufkleber 14 angebracht ist. Der Adreßaufkleber 14 enthält neben der Adresse des Empfängers den Zustellcode 6, durch den der Zusteller zum Zugriff auf den Zustellbehälter 10 autorisiert wird. Der Zustellcode 6 kann beispielsweise, wie zuvor beschrieben, beim Bestellvorgang vom Empfänger an den Online-Anbieter übermittelt werden. Hierzu kann heute ein Adreßzusatzfeld verwendet werden, in das der Empfänger über eine entsprechende Eingabemaske auf den Internet-Seiten des Anbieters den Zustellcode 6 einträgt. Sollte ein solches Adreßzusatzfeld nicht vorhanden sein, kann der Zustellcode 6 sonstwie an die Adresse angehängt werden. Der Zusteller gibt den Zustellcode 6 in das elektronische Codeschloß 11 ein, worauf sich die vordere Klappe 13 des Zustellbehälters 10 öffnen läßt. Der Zustellvorgang ist abgeschlossen, wenn nach Einlegen des Paketes 8 in den Behälter 10 die Klappe 13 wieder verschlossen wird. Gemäß der Programmierung des Codeschlosses 11 erfolgt dann eine Sperrung, so daß eine erneute Öffnung des Zustellbehälters 10 mittels des Zustellcodes 6 nicht mehr möglich ist. Lediglich der Empfänger kann erfindungsgemäß zur Entnahme des zugestellten Paketes 8 mittels seines Empfängerschlüssels für ein mechanisches Schloß 15 den Zustellbehälter 10 öffnen, wonach das Codeschloß 11 für eine nachfolgende Warenzustellung freigeschaltet wird. Die Klappe 13 des Zustellbehälters 10 weist zusätzlich einen Briefschlitz 16 auf, über welchen normale Briefsendungen unabhängig von dem erfindungsgemäßen Zustellverfahren eingeworfen werden können.

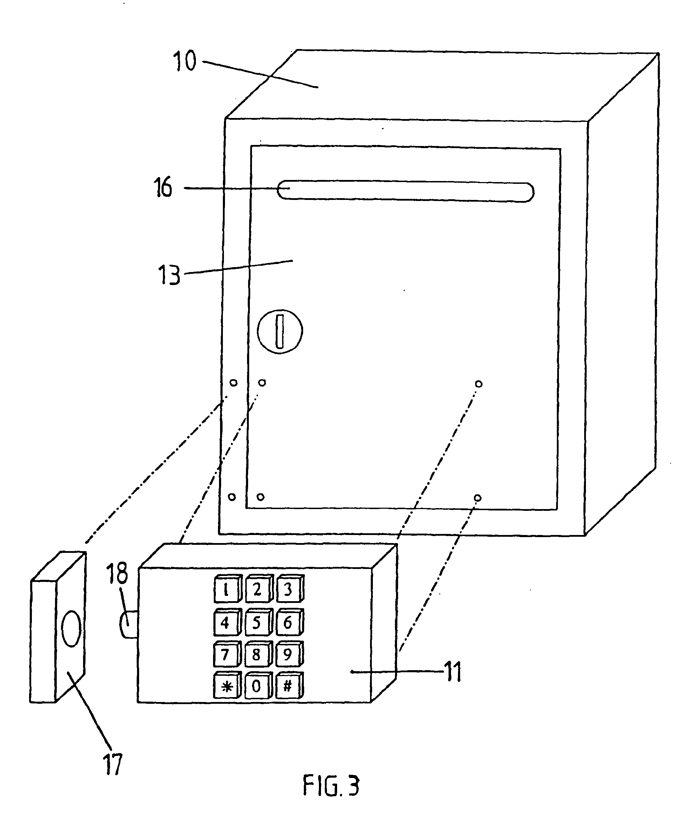

In der in Figur 3 gezeigten Variante ist das Codeschloß 11 nachträglich an dem Zustellbehälter 10, bei dem es sich beispielsweise um einen herkömmlichen abschließbaren Briefkastens handeln kann, anbringbar. Hierzu wird das Codeschloß 11 an der Tür 13 des Briefkasten 10 angeschraubt. Am Rahmen des Briefkastens wird ein Aufnahmeelement 17 zur Aufnahme eines Riegels 18 des Codeschlosses 11 befestigt.

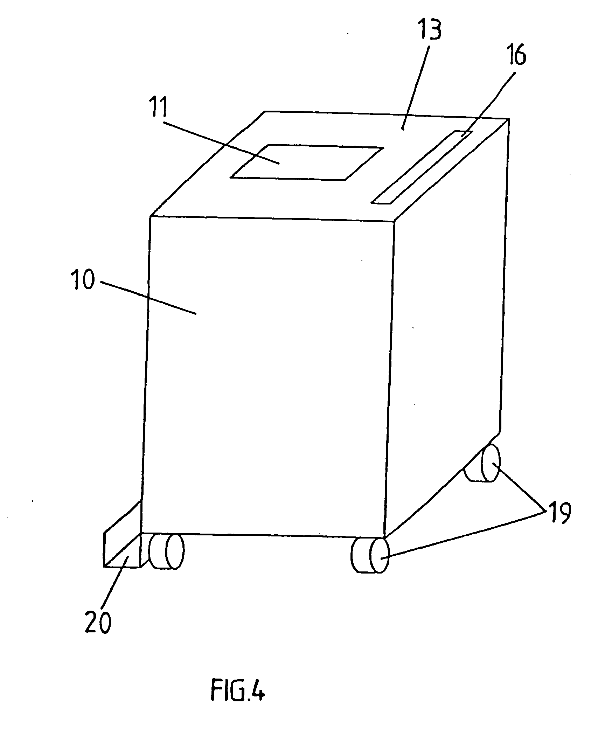

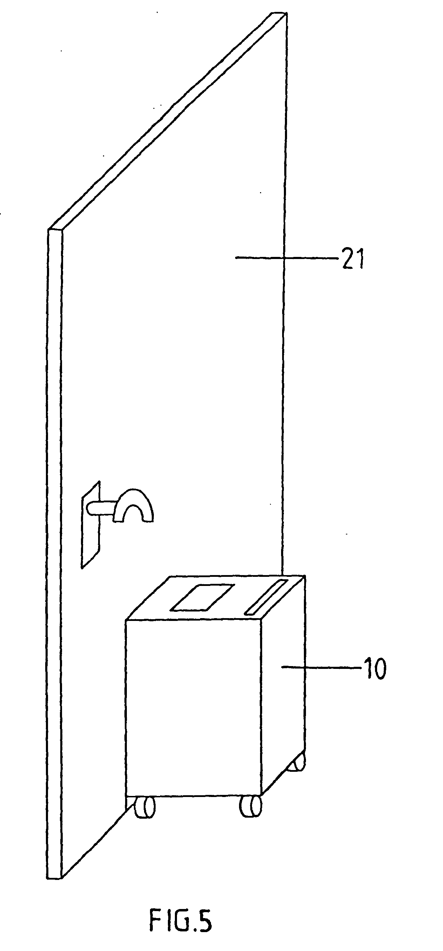

Der in der Figur 4 gezeigte Zustellbehälter 10 verfügt über eine obenliegende Öffungsklappe 13 mit darin integriertem Codeschloß 11 sowie einen Briefschlitz 16. Ein derartiger Zustellbehälter ist vorzugsweise für großformatige Warensendungen geeignet. Der Behälter ist mobil und verfügt zu diesem Zweck über Lenkrollen 19. Des weiteren verfügt der Zustellbehälter 10 über ein Befestigungselement 20 in Form eines U-förmigen Profils. Über dieses Profil kann der Zustellbehälter 10, wie in der Figur 5 gezeigt, an einem Türblatt 21 befestigt werden.

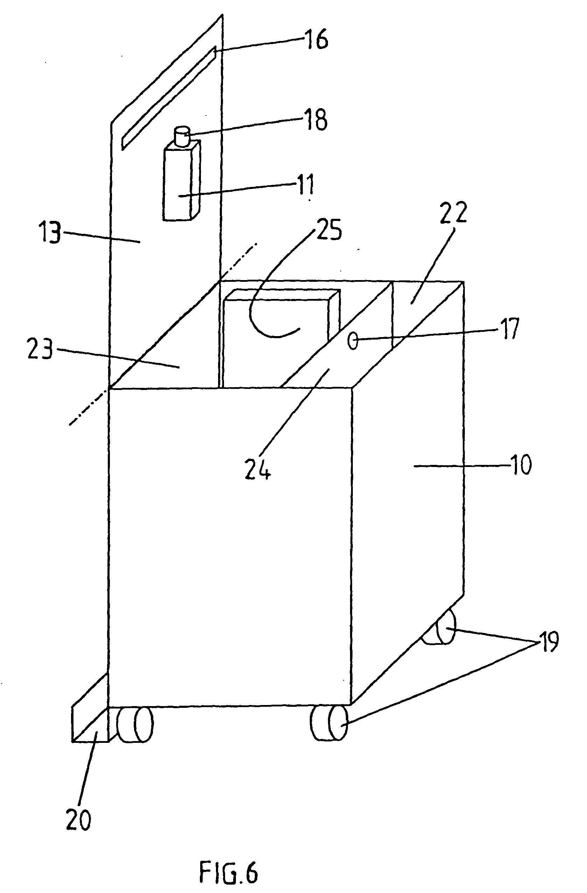

Die Figur 6 zeigt den Zustellbehälter 10 mit geöffneter Klappe 13. An der Unterseite des Deckels 13 ist das Codeschloß 11 mit Verriegelungselement 18 zu erkennen, welches mit dem Aufnahmeelement 17 zusammenwirkt. Der Innenraum des Zustellbehälters 10 ist in zwei Kammern 22 und 23 aufgeteilt. Die beiden Kammern sind durch eine Trennwand 24, die eine thermische Isolierung aufweist, voneinander getrennt. Die Kammer 23 verfügt über ein Kühlaggregat 25, wodurch die dargestellte Zustellbox ihre Eignung auch für die Zustellung von verderblichen Lebensmittelsendungen erhält.

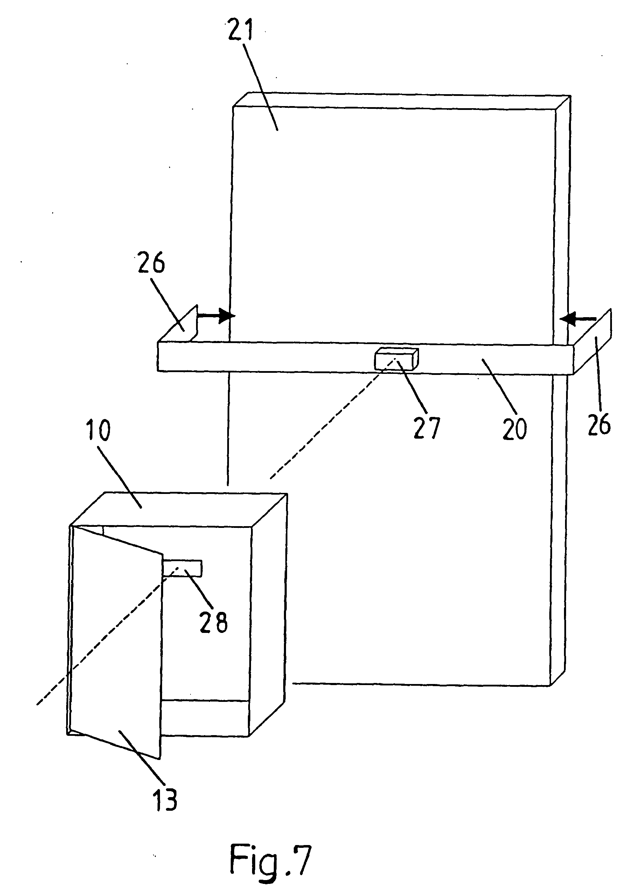

In der Figur 7 ist der Zustellbehälter 10 gezeigt, der mittels des Befestigungselements 20 an dem Türblatt 21 fixiert werden kann. Das Befestigungselement 20 ist als Spannbefestigung ausgebildet, welche an ihren Enden zwei Halteelemente 26 aufweist. Die Halteelemente 26 sind, wie durch die Pfeile angedeutet, gegeneinander verspannbar und greifen an den gegenüberliegenden seitlichen Kanten des Türblatts 21 an. Hierdurch entsteht eine kraftschlüssige Verbindung, welche den Zustellbehälter 10 an dem Türblatt 21 sicher fixiert. Das Befestigungselement 20 weist einen Halterungsriegel 27 auf, welcher in eine entsprechende Öffnung 28 an der Rückwand des Zustellbehälters 10 eingreift. Befindet sich der Zustellbehälter 10 an dem Türblatt 21, so ist der Halterungsriegel 27 nur bei geöffneter Klappe 13 zugänglich. Durch Verdrehen des Halterungsriegels 27 wird der Zustellbehälter 10 sicher an dem Befestigungselement 20 fixiert. Bei geschlossener Klappe 13 kann der Zustellbehälter 10 demgemäß nicht von Unbefugten von dem Türblatt 21 abgelöst werden.

## Patentansprüche

1. Verfahren für den Betrieb eines Warenzustellbehälters (10) mit elektronischem Codeschloß (11), wobei eine Öffnung des Behälters (10) für die Zustellung von Warensendungen (8) mittels eines Zustellcodes (6) erfolgt, wobei ein Zusteller (9) zur Öffnung des Behälters (10) den Zustellcode (6) in das Codeschloß (11) eingibt, und mittels eines Empfängerschlüssels (12), über den ausschließlich der Empfänger (1) der Warensendung (8) verfügt, wobei der Empfängerschlüssel (12) entweder ein Code für das elektronische Codeschloß (11) oder ein mechanischer Schlüssel zum Öffnen des Behälters (10) ist,
**dadurch gekennzeichnet,**
**daß** das Codeschloß (11) nach einer mittels des Zustellcodes (6) erfolgten Öffnung des Behälters (10) für eine erneute Öffnung mittels des Zustellcodes (6) gesperrt wird, und zwar in der Weise, daß der Behälter (10) nach der Sperrung nur noch mittels des Empfängerschlüssels (12) geöffnet werden kann, wobei der Behälter (10) wieder entsperrt wird, sobald eine Öffnung des Zustellbehälters (10) mittels des Empfängerschlüssel (12) erfolgt ist, so daß der Behälter (10) danach für die Zustellung von Warensendungen (8) mittels des Zustellcodes (6) wieder geöffnet werden kann.

2. Zustellbehälter (10) mit elektronischem Codeschloß (11), der derart eingerichtet ist, daß eine Öffnung des Behälters (10) für die Zustellung von Warensendungen (8) mittels eines Zustellcodes (6) und mittels eines Empfängerschlüssels (12) erfolgt, wobei ein Zusteller (9) zur Öffnung des Behälters (10) den Zustellcode (6) in das Codeschloß (11) eingibt, oder mittels eines Empfängerschlüssels (12), über den ausschließlich der Empfänger (1) der Warensendung (8) verfügt, wobei der Empfängerschlüssel (12) entweder ein Code für das elektronische Codeschloß (11) oder ein mechanischer Schlüssel zum Öffnen des Behälters (10) ist,
**dadurch gekennzeichnet,**
**daß** das Codeschloß (11) eine Programmsteuerung aufweist, durch welche das Codeschloß (10) nach einer erfolgten Öffnung des Behälters (10) mittels des Zustellcodes (6) für eine erneute Öffnung mittels des Zustellcodes (6) gesperrt wird, und zwar in der Weise, daß der Behälter (10) nach der Sperrung nur noch mittels des Empfängerschlüssels (12) geöffnet werden kann, wobei der Behälter (10) wieder entsperrt wird, sobald eine Öffnung des Zustellbehälters (10) mittels des Empfängerschlüssel (12) erfolgt ist, so daß der Behälter (10) danach für die Zustellung von Warensendungen (8) mittels des Zustellcodes (6) wieder geöffnet werden kann.

3. Zustellbehälter nach Anspruch 2, **dadurch gekennzeichnet, daß** dem Codeschloß (11) eine elektronische Speichereinheit zugeordnet ist, in welcher eine Mehrzahl von Zustellcodes (6) speicherbar ist.

4. Zustellbehälter nach Anspruch 2, **gekennzeichnet durch** eine Ausgabeeinheit, **durch** welche nach erfolgter Zustellung die Ausgabe eines Quittungsbelegs erfolgt.

5. Zustellbehälter nach Anspruch 2, **gekennzeichnet durch** eine Statusanzeige, **durch** welche der aktuelle Zustand des Behälters (10) angezeigt wird, nämlich ob das Codeschloß (11) nach erfolgter Zustellung gesperrt ist oder ob der Behälter (10) für die Zustellung einer Warensendung (8) bereit ist.

6. Zustellbehälter nach Anspruch 2, **gekennzeichnet durch** ein Sichtfenster für eine Sichtprüfung des Behälterinhaltes.

7. Zustellbehälter nach Anspruch 2, **gekennzeichnet durch** ein Befestigungselement (20), mit dem der Zustellbehälter (10) lösbar an einem Türblatt (21) oder an einem Türrahmen befestigbar ist.

8. Zustellbehälter nach Anspruch 7, **dadurch gekennzeichnet, daß** das Befestigungselement (20) mit dem Türblatt (21) eine formschlüssige Verbindung bildet.

9. Zustellbehälter nach Anspruch 8, **dadurch gekennzeichnet, daß** es sich bei dem Befestigungselement (20) um ein U-förmiges Profil handelt, in welches das Türblatt (21) eingreift.

10. Zustellbehälter nach Anspruch 7, **dadurch gekennzeichnet, daß** das Befestigungselement (20) mit dem Türblatt (21) und dem Türrahmen bei geschlossener Tür eine kraftschlüssige Verbindung bildet.

11. Zustellbehälter nach Anspruch 7, **dadurch gekennzeichnet, daß** das Befestigungselement (20) als Spannbefestigung ausgebildet ist, welche mittels zweier an den gegenüberliegenden seitlichen Kanten des Türblatts (21) angreifender und gegeneinander verspannbarer Halteelemente (26) an dem Türblatt (21) kraftschlüssig fixierbar ist.

12. Zustellbehälter nach Anspruch 2, **gekennzeichnet durch** eine thermische Isolierung und ein Kühlaggregat.

13. Zustellbehälter nach wenigstens einem der Ansprüche 2 bis 12, **dadurch gekennzeichnet, daß** der Zustellbehälter (10) in eine Mehrzahl von unabhängig voneinander verschließbaren Kammern (22, 23) aufgeteilt ist.

## Claims

1. A method of operating an article delivery container (10) with an electronic code lock (11), wherein opening of the container (10) for the delivery of article shipments (8) is effected by means of a delivery code (6), wherein to open the container (10) a delivery agent (9) inputs the delivery code (6) into the code lock (11), and by means of a consignee key (12) which exclusively the consignee (1) of the article shipment (8) has, wherein the consignee key (12) is either a code for the electronic code lock (11) or a mechanical key for opening the container (10),
**characterised in that**
after an opening of the container (10) which is effected by means of the delivery code (6), the code lock (11) is blocked for a renewed opening by means of the delivery code (6), more specifically in such a way that after the blocking the container (10) can only still be opened by means of the consignee key (12), wherein the container (10) is unblocked again as soon as opening of the delivery container (10) is effected by means of the consignee key (12) so that thereafter the container (10) can be opened again for the delivery of article shipments (8) by means of the delivery code (6).

2. A delivery container (10) with electronic code lock (11) which is so adapted that opening of the container (10) for the delivery of article shipments (8) is effected by means of a delivery code (6) and by means of a consignee key (12), wherein to open the container (10) a delivery agent (9) inputs the delivery code (6) into the code lock (11) or by means of a consignee key (12) which exclusively the consignee (1) of the article shipment (8) has, wherein the consignee key (12) is either a code for the electronic code lock (11) or a mechanical key for opening the container (10),
**characterised in that**
the code lock (11) has a program control by which after an opening of the container (10) which is effected by means of the delivery code (6), the code lock (11) is blocked for a renewed opening by means of the delivery code (6), more specifically in such a way that after the blocking the container (10) can only still be opened by means of the consignee key (12), wherein the container (10) is unblocked again as soon as opening of the delivery container (10) is effected by means of the consignee key (12) so that thereafter the container (10) can be opened again for the delivery of article shipments (8) by means of the delivery code (6).

3. A delivery container according to claim 2 **characterised in that** associated with the code lock (11) is an electronic memory unit in which a plurality of delivery codes (6) can be stored.

4. A delivery container according to claim 2 **characterised by** an output unit by which, after delivery has been effected, the output of a receipt document is effected.

5. A delivery container according to claim 2 **characterised by** a status display by which the current condition of the container (10) is displayed, namely whether the code lock (11) is blocked after delivery has occurred or whether the container (10) is ready for the delivery of an article shipment (8).

6. A delivery container according to claim 2 **characterised by** a viewing window for visual checking of the content of the container.

7. A delivery container according to claim 2 **characterised by** a fixing element (20) with which the delivery container (10) can be releasably fixed to a door leaf (21) or to a door frame.

8. A delivery container according to claim 7 **characterised in that** the fixing element (20) forms a positively locking connection to the door leaf (21).

9. A delivery container according to claim 8 **characterised in that** the fixing element (20) is a U-shaped member into which the door leaf (21) engages.

10. A delivery container according to claim 7 **characterised in that** the fixing element (20) forms a force-locking connection to the door leaf (21) and the door frame when the door is closed.

11. A delivery container according to claim 7 **characterised in that** the fixing element (20) is in the form of a clamping fixing which can be force-lockingly fixed to the door leaf (21) by means of two holding elements (26) which engage the oppositely disposed lateral edges of the door leaf (21) and which can be braced against each other.

12. A delivery container according to claim 2 **characterised by** thermal insulation and a refrigeration unit.

13. A delivery container according to at least one of claims 2 to 12 **characterised in that** the delivery container (10) is divided into a plurality of chambers (22, 23) which can be closed independently of each other.

## Revendications

1. Procédé de fonctionnement d'un caisson de factage (10) muni d'une serrure codée (11) électronique, l'ouverture du caisson (10) en vue de la remise de colis (8) étant effectuée au moyen d'un code d'accès (6), un préposé à la distribution (9) entrant le code d'accès (6) dans la serrure codée (11) pour ouvrir le caisson (10), et au moyen d'une clé de réception (12), qui est à l'unique disposition du destinataire (1) des colis (8), la clé de réception (12) étant soit un code pour la serrure codée (11) électronique, soit une clé mécanique destinée à ouvrir le caisson (10), **caractérisé en ce que**, après l'ouverture du caisson (10) au moyen du code d'accès (6), la serrure codée (11) est verrouillée contre toute nouvelle ouverture au moyen du code d'accès (6), à savoir de telle sorte que le caisson (10) après le verrouillage ne peut être ouvert qu'au moyen de la clé de réception (12), le caisson (10) pouvant être déverrouillé à nouveau dès qu'une ouverture du caisson de factage (10) a été effectuée au moyen de la clé de réception (12), de telle sorte que le caisson (10) peut ensuite être à nouveau ouvert au moyen du code d'accès (6) en vue de la remise de colis (8).

2. Caisson de factage (10) comportant une serrure codée (11), lequel est conçu de telle sorte qu'une ouverture du caisson (10) en vue de la remise de colis (8) est effectuée au moyen d'un code d'accès (6) et au moyen d'une clé de réception (12), un préposé à la distribution (9) entrant le code d'accès (6) dans la serrure codée (11) pour ouvrir le caisson (10), ou au moyen d'une clé de réception (12), qui est à l'unique disposition du destinataire (1) des colis (8), la clé de réception (12) étant soit un code pour la serrure codée (11) électronique, soit une clé mécanique destinée à ouvrir le caisson (10), **caractérisé en ce que** la serrure codée (11) comporte une commande programmée, par laquelle la serrure codée (11), après l'ouverture du caisson (10) au moyen du code d'accès (6), est verrouillée contre toute nouvelle ouverture au moyen du code d'accès (6), à savoir de telle sorte que le caisson (10) après le verrouillage ne peut être ouvert qu'au moyen de la clé de réception (12), le caisson (10) pouvant être déverrouillé à nouveau dès qu'une ouverture du caisson de factage (10) a été effectuée au moyen de la clé de réception (12), de telle sorte que le caisson (10) peut ensuite être à nouveau ouvert au moyen du code d'accès (6) en vue de la remise de colis (8).

3. Caisson de factage selon la revendication 2, **caractérisé en ce que** la serrure codée (11) est associée à une unité de mémoire électronique, dans laquelle peut être stockée une pluralité de codes d'accès (6).

4. Caisson de factage selon la revendication 2, **caractérisé par** une unité d'édition, laquelle délivre une quittance attestant la remise correcte des colis.

5. Caisson de factage selon la revendication 2, **caractérisé par** un dispositif d'affichage d'état, lequel affiche l'état actuel du caisson (10), à savoir si la serrure codée (11) est verrouillée à la suite d'une remise de colis ou si le caisson (10) est prêt pour la réception de colis (8).

6. Caisson de factage selon la revendication 2, **caractérisé par** une fenêtre permettant de contrôler le contenu du caisson.

7. Caisson de factage selon la revendication 2, **caractérisé par** un élément de fixation (20), par lequel le caisson de factage (10) peut être fixé de manière amovible à un vantail de porte (21) ou un bâti de porte.

8. Caisson de factage selon la revendication 7, **caractérisé en ce que** l'élément de fixation (20) forme un assemblage par conjugaison de forme avec le vantail de porte (21).

9. Caisson de factage selon la revendication 8, **caractérisé en ce que** l'élément de fixation (20) est un profilé en forme de U, dans lequel s'engage le vantail de porte (21).

10. Caisson de factage selon la revendication 7, **caractérisé en ce que** l'élément de fixation (20) forme avec le vantail de porte (21) et le bâti de porte un assemblage par frottement lorsque la porte est fermée.

11. Caisson de factage selon la revendication 7, **caractérisé en ce que** l'élément de fixation (20) est conçu sous forme de fixation par serrage, qui peut être fixée au moyen d'un assemblage par frottement sur le vantail de porte (21) au moyen de deux éléments de retenue (26) entrant en prise sur les bords latéraux opposés du vantail de porte (21) et pouvant être bloqués l'un par rapport à l'autre.

12. Caisson de factage selon la revendication 2, **caractérisé par** une isolation thermique et un organe de refroidissement.

13. Caisson de factage selon l'une quelconque des revendications 2 à 12, **caractérisé en ce que** le caisson de factage (10) est divisé en une pluralité de compartiments (22, 23) pouvant être verrouillés indépendamment les uns des autres.
